# EUROPÄISCHE PATENTSCHRIFT

(11) **EP 3 918 968 B1**
(45) Veröffentlichungstag und Bekanntmachung des Hinweises auf die Patenterteilung: **02.07.2025**
(21) Anmeldenummer: 21176807.2
(22) Anmeldetag: 31.05.2021
(51) Int. Cl.: A47L 9/00, A47L 11/20

(54) **SICH SELBSTTÄTIG FORTBEWEGENDES BODENBEARBEITUNGSGERÄT MIT EINER UMGEBUNGSKARTE**
AUTOMATICALLY MOVING SOIL PROCESSING DEVICE WITH A MAP OF THE AREA
APPAREIL DE TRAITEMENT DU SOL AUTONOME DOTÉ D'UNE CARTE D'ENVIRONNEMENT

(30) Priorität: 02.06.2020 DE 102020114660
(43) Veröffentlichungstag der Anmeldung: 08.12.2021
(73) Patentinhaber: Vorwerk & Co. Interholding GmbH, 42275 Wuppertal (DE)
(72) Erfinder: Eickenberg, Ralf, 42719 Solingen (DE); Sauerwald, Andres, 46238 Bottrop (DE)
(74) Vertreter: Müller, Enno

(56) Entgegenhaltungen:
- DE-A1- 102017 109 219
- KR-A- 20200 002 747
- US-A1- 2014 324 271

## Beschreibung

### Gebiet der Technik

Die Erfindung betrifft ein sich selbsttätig fortbewegendes Bodenbearbeitungsgerät mit einer Antriebseinrichtung zum selbsttätigen Fortbewegen des Bodenbearbeitungsgerätes innerhalb einer Umgebung, einem Energiespeicher, einem eine Umgebungskarte der Umgebung aufweisenden Datenspeicher und einer Navigationseinrichtung zum Navigieren und Selbstlokalisieren des Bodenbearbeitungsgerätes innerhalb der Umgebung anhand der Umgebungskarte, wobei die Umgebungskarte Umgebungsteilbereiche aufweist.

Des Weiteren betrifft die Erfindung ein Verfahren zum Betrieb eines solchen Bodenbearbeitungsgerätes.

### Stand der Technik

Bodenbearbeitungsgeräte der vorgenannten Art sind im Stand der Technik hinreichend bekannt. Diese können beispielsweise Bodenbearbeitungsroboter wie Reinigungsroboter, Mähroboter, Polierroboter, Schleifroboter, Bohnerroboter oder ähnliche sein. Ein Bodenbearbeitungsgerät weist üblicherweise mindestens ein Bodenbearbeitungselement auf, das für die Bodenbearbeitungstätigkeit des Bodenbearbeitungsgerätes verwendet wird, beispielsweise ein Reinigungselement wie eine Bürste oder ein Wischelement, ein Polierelement, ein Schleifelement, ein Mähwerkzeug oder dergleichen. Es ist bekannt, derartige Bodenbearbeitungsgeräte mit einer Navigationseinrichtung auszustatten, die ausgebildet ist, das Bodenbearbeitungsgerät innerhalb einer Umgebung zu navigieren und zu lokalisieren. Zu diesem Zweck greift das Bodenbearbeitungsgerät auf eine Umgebungskarte zu, welche beispielsweise selbst von dem Bodenbearbeitungsgerät erstellt wird. Hierzu kann das Bodenbearbeitungsgerät ein sogenanntes SLAM-Verfahren (Simultaneous Localisation and Mapping) nutzen. Während einer Bodenbearbeitungstätigkeit kann das Bodenbearbeitungsgerät seine Eigenposition innerhalb der Umgebungskarte feststellen und einen Bewegungspfad nachvollziehen. Dabei ist es auch bekannt, in der Umgebungskarte zu vermerken, welche Umgebungsteilbereiche im Verlauf einer Bearbeitungsroute angesteuert werden.

Des Weiteren ist es bekannt, dass die Steuer- und Auswerteeinrichtung des Bodenbearbeitungsgerätes die Bodenbearbeitungstätigkeit bzw. Bodenbearbeitungstätigkeiten anhand eines im Voraus geplanten Bodenbearbeitungsprogramms steuert, wobei das Bodenbearbeitungsprogramm beispielsweise eine Mehrzahl von Bodenbearbeitungstätigkeiten in mehreren Umgebungsteilbereichen der Umgebung vorsieht, die das Bodenbearbeitungsgerät dann zeitlich nacheinander abarbeitet. Zur Bereitstellung von Energie für die Verbraucher des Bodenbearbeitungsgerätes, beispielsweise Motoren einer Antriebseinrichtung und/oder eines Bodenbearbeitungselementes, weist das Bodenbearbeitungsgerät üblicherweise einen Energiespeicher, insbesondere Akkumulator, auf, welcher mittels einer Ladeeinrichtung wiederaufladbar ist. Zu diesem Zweck kann das Bodenbearbeitungsgerät beispielsweise selbsttätig an die Ladeeinrichtung ankoppeln, beispielsweise an eine Ladeeinrichtung, die in eine Servicestation für das Bodenbearbeitungsgerät integriert ist. Alternativ kann ein Nutzer das Bodenbearbeitungsgerät und/oder dessen Energiespeicher auch händisch mit der Ladeeinrichtung verbinden.

Um eine Mehrzahl von Bodenbearbeitungstätigkeiten möglichst effizient innerhalb der Umgebung auszuführen, sind unterschiedliche Navigationsstrategien des Bodenbearbeitungsgerätes bekannt. Eine Strategie sieht vor, das Bodenbearbeitungsgerät so zu steuern, dass eine in dem Energiespeicher vorhandene Energiemenge genutzt wird, um einen möglichst großen Flächenbereich der Umgebung zu bearbeiten, idealerweise möglichst 100 Prozent aller zu bearbeitenden Umgebungsteilbereiche. Alternativ kann vorgesehen sein, eine Bearbeitung der Umgebung innerhalb einer möglichst kurzen Zeitspanne zu erreichen.

Nachteilig bei den vorbekannten Bodenbearbeitungsstrategien ist, dass die Energieentnahme aus dem Energiespeicher für Bodenbearbeitungstätigkeiten nicht auf die elektrochemischen Eigenschaften eines Akkumulators abgestimmt ist, d. h. dass unter Umständen die Lebensdauer des Energiespeichers ungewollt verkürzt wird und/oder eine vorhandene Maximalkapazität nicht optimal genutzt wird.

Aus der KR 2020/0002747 A ist ein sich selbsttätig fortbewegendes Bodenbearbeitungsgerät bekannt, das ausgebildet ist mit in einem Haus befindlichen elektrischen Geräten, wie einer Klimaanlage, einem Kühlschrank etc., zu kommunizieren. Weiter ist ein Hausüberwachungsgerät vorgesehen, das sowohl Informationen von dem sich selbsttätig fortbewegenden Bodenbearbeitungsgerät wie von den elektrischen Geräten erhält und hierüber auch eine Steuerung des Energieverbrauches der elektrischen Geräte vornehmen kann. Zum Inhalt dieser Druckschrift ist auch auf die US 2014/0324271 A1 zu verweisen.

### Zusammenfassung der Erfindung

Ausgehend von dem vorgenannten Stand der Technik ist es Aufgabe der Erfindung, ein sich selbsttätig fortbewegendes Bodenbearbeitungsgerät sowie ein Verfahren zu dessen Betrieb zu schaffen, welches die elektrochemischen Eigenschaften von Akkumulatoren, insbesondere Lithium-Ionen-Akkus, berücksichtigt, wobei insbesondere die Lebensdauer des Energiespeichers und/oder die maximal mögliche Energiespeicherkapazität des Energiespeichers verbessert wird.

Zur Lösung der vorgenannten Aufgabe wird vorgeschlagen, dass die Umgebungskarte des Bodenbearbeitungsgerätes zu mindestens zwei Umgebungsteilbereichen eine Energieangabe aufweist, die angibt, welche Energiemenge das Bodenbearbeitungsgerät zur Bodenbearbeitung des jeweiligen Umgebungsteilbereiches benötigen wird, und dass eine Steuer- und Auswerteeinrichtung vorgesehen ist, welche eingerichtet ist, auf die Umgebungskarte zuzugreifen, die gespeicherten Energiemengen miteinander zu vergleichen und in Abhängigkeit von den gespeicherten Energiemengen eine Reihenfolge festzulegen, mit welcher die Umgebungsteilbereiche zeitlich aufeinanderfolgend bearbeitet werden.

Erfindungsgemäß sind in der Umgebungskarte, insbesondere einer persistenten Umgebungskarte des Bodenbearbeitungsgerätes, nun Informationen gespeichert, die angeben, welche Energiemenge notwendig ist, um eine Bodenbearbeitung des zugeordneten Umgebungsteilbereiches mittels des Bodenbearbeitungsgerätes durchzuführen. Die Energieangabe kann entweder in der Umgebungskarte selbst gespeichert sein, nämlich in Verbindung mit dem zugeordneten Umgebungsteilbereich, oder mit der Umgebungskarte verlinkt sein, so dass die Speicherung der Energieangabe in einer zu der Umgebungskarte abweichenden Datei erfolgt. Die Energiemenge zur Bodenbearbeitung des jeweiligen Umgebungsteilbereiches ist auf eine definierte Bodenbearbeitungstätigkeit eines bestimmten Bodenbearbeitungsgerätes bezogen, wobei die definierte Bodenbearbeitungstätigkeit zum Beispiel eine Standard-Bodenbearbeitungstätigkeit sein kann, die das Bodenbearbeitungsgerät in Abwesenheit einer besonderen Auswahltätigkeit eines Nutzers standardmäßig automatisch ausführt. Eine solche Standard-Bodenbearbeitungstätigkeit kann bezogen auf ein als Staubsauger ausgebildetes Bodenbearbeitungsgerät beispielsweise eine Saugreinigungstätigkeit mit einer voreingestellten, bestimmten Leistungsstufe, nämlich Saugstufe und gegebenenfalls Drehzahl eines Reinigungselementes, sein. Des Weiteren kann es auch vorgesehen sein, dass zu jedem Umgebungsteilbereich mehrere Energieangaben gespeichert sind, die sich auf verschiedene Bodenbearbeitungstätigkeiten beziehen, beispielsweise Bodenbearbeitungstätigkeiten mit unterschiedlichen Bodenbearbeitungsintensitäten oder Bodenbearbeitungstätigkeiten, die mit Hilfe unterschiedlicher Reinigungselemente desselben Bodenbearbeitungsgerätes ausgeführt werden. Derartige Energieangaben können tätigkeitsbezogen beispielsweise in einer Tabelle gespeichert sein, welche mit der Umgebungskarte und/oder dem jeweiligen Umgebungsteilbereich verlinkt ist. Anhand der mit Energieangaben versehenen Umgebungskarte kann eine Steuer- und Auswerteeinrichtung des Bodenbearbeitungsgerätes nun beispielsweise einen solchen Umgebungsteilbereich als Ort einer Bearbeitung vorsehen, welcher bezogen auf aktuelle Zustandsparameter des Energiespeichers besonders vorteilhaft ist. Besonders bevorzugt kann ein solcher Umgebungsteilbereich im Rahmen einer nächsten Bodenbearbeitungstätigkeit bearbeitet werden, welcher eine relativ große Energiemenge zur optimalen Ausführung der definierten Bodenbearbeitungstätigkeit benötigt. Durch die Entnahme einer relativ großen Energiemenge kann ein sich in einem kalten Zustand befindlicher Energiespeicher vorteilhaft erwärmt werden. Dabei liegt die Maßgabe zugrunde, dass der Energiespeicher zu Beginn eines Arbeitsbetriebs möglichst stark belastet werden sollte, damit sich der Energiespeicher dadurch möglichst schnell erhitzt und der spezifische Innenwiderstand des Energiespeichers sinkt. Durch die Auswahl eines besonders energieintensiven Umgebungsteilbereiches kann der Energiespeicher somit besonders schnell von einem kalten Zustand in einen aufgewärmten Zustand versetzt werden, so dass eine effiziente Energieabgabe erreicht werden kann. Selbstverständlich sollte dabei zusätzlich sichergestellt sein, dass der Energiespeicher niemals über eine bestimmte Maximaltemperatur hinaus erwärmt wird, was ansonsten die Lebensdauer und Qualität des Energiespeichers negativ beeinflussen würde.

Insbesondere kann vorgesehen sein, dass die Energiemenge in Abhängigkeit von einer in dem Umgebungsteilbereich vorhandenen Bodenart ermittelt ist, und/oder dass die Energiemenge in Abhängigkeit von einer empirisch ermittelten Energiemenge zur Bearbeitung des Umgebungsteilbereiches ermittelt ist. Gemäß einer ersten Ausführung kann eine charakteristische Energiemenge berechnet sein, die üblicherweise für eine so definierte Standard-Bodenbearbeitung zur Bodenbearbeitung einer bestimmten Bodenart benötigt wird. Die Bodenart kann in eine von mehreren Kategorien eingeteilt sein, beispielsweise in Hartböden und Teppichböden, wobei weitere Unterklassifikationen möglich sind. Unterklassen von Hartböden sind beispielsweise Fliesenböden, Holzböden, PVC-Böden und andere. Teppichböden bzw. Teppiche können unterteilt sein in hochflorige Teppiche bzw. Teppichböden, niedrigflorige Teppiche bzw. Teppichböden und andere. Die bodenartabhängige Energiemenge bezieht sich jeweils auf einerseits einen bestimmten Umgebungsteilbereich, insbesondere dessen Flächengröße, und andererseits auf eine definierte Bodenbearbeitungstätigkeit, zu deren Ausführung die betreffende Energiemenge benötigt wird. Die Bodenbearbeitungstätigkeit kann dabei definiert sein durch eine bestimmte Intensität der Bodenbearbeitung, durch einen bestimmten für die Bodenbearbeitungstätigkeit eingestellten Bodenbearbeitungsparameter des Bodenbearbeitungsgerätes, insbesondere bestimmte Leistungsstufen von Bodenbearbeitungselementen und/ oder Antriebseinrichtungen, oder andere Parameter des Bodenbearbeitungsgerätes. Des Weiteren kann die Energiemenge zusätzlich oder alternativ empirisch ermittelt sein. Die empirisch ermittelte Energiemenge ist dabei vorzugsweise anhand einer Bodenbearbeitungshistorie des Bodenbearbeitungsgerätes ermittelt. Insbesondere können mehrere aus der Bodenbearbeitungshistorie des Bodenbearbeitungsgerätes ermittelte Energiemengen gemittelt sein, um für eine definierte Bodenbearbeitungstätigkeit einen charakteristischen Durchschnittswert der benötigten Energiemenge zu definieren.

Des Weiteren wird vorgeschlagen, dass die Umgebungskarte eine Bodenartangabe zu einer in dem Umgebungsteilbereich vertretenen Bodenart aufweist, wobei die Bodenart insbesondere ausgewählt ist aus Hartboden, kurzfloriger Teppichboden, hochfloriger Teppichboden. In der Umgebungskarte bzw. alternativ mit der Umgebungskarte verlinkt, sind somit Bodenartangaben gespeichert, die Umgebungsteilbereiche identifizieren, zu deren Bodenbearbeitung eine bestimmte Energiemenge benötigt wird. Zu besonders energieintensiven Bodenarten gehören beispielsweise Teppichböden, im Unterschied zu Hartböden. Dabei erfordert eine Bodenbearbeitung eines hochflorigen Teppichbodens des Weiteren eine größere Energiemenge als eine Bodenbearbeitung eines kurzflorigen Teppichbodens. Falls es sich bei dem Bodenbearbeitungsgerät beispielsweise um einen Mähroboter handelt, kann sich die Bodenart nach der Höhe des zu mähenden Grases unterscheiden und/oder nach dessen Zusammensetzung aus unterschiedlichen Gräserarten, die zum Mähen unterschiedlich hohe Energiemengen erfordern. Ebenso können auch Bodenartangaben definiert sein, die beispielsweise für ein Poliergerät oder Bohnergerät relevant sind, wobei die Bodenarten beispielsweise durch einen durch die Oberfläche erzeugten mechanischen Widerstand charakterisiert sein können. Die in der Umgebungskarte gespeicherten Bodenartangaben ermöglichen einer Steuer-und Auswerteeinrichtung des Bodenbearbeitungsgerätes in jedem Fall eine schnelle Ermittlung einer benötigten Energiemenge für einen der Umgebungsteilbereiche.

Des Weiteren wird vorgeschlagen, dass die Umgebungskarte für den jeweiligen Umgebungsteilbereich eine zur Bodenbearbeitung benötigte charakteristische Energiemenge pro Flächeneinheit angibt. Gemäß dieser Ausgestaltung kann für jeden der Umgebungsteilbereiche bereits eine charakteristische Energiemenge pro Flächeneinheit berechnet sein, die vorzugsweise gleichzeitig in Abhängigkeit von definierten Bodenbearbeitungsparametern errechnet ist, beispielsweise für eine so definierte Standard- Bodenbearbeitung. In diesem Fall ist es nicht mehr erforderlich, dass eine Steuer- und Auswerteeinrichtung ad hoc vor Beginn einer nächsten Bodenbearbeitungstätigkeit aus einer Bodenartangabe zunächst eine benötigte Energiemenge berechnet. Vielmehr kann anhand der charakteristischen Energiemenge pro Flächeneinheit und einer bekannten Flächengröße des zu bearbeitenden Umgebungsteilbereiches direkt die Energiemenge ermittelt werden, die für eine definierte Bodenbearbeitung durch das Bodenbearbeitungsgerät benötigt wird. Die definierte Bodenbearbeitung folgt dabei vordefinierten Parametern, die beispielsweise einer bestimmten Fortbewegungsgeschwindigkeit des Bodenbearbeitungsgerätes während der Bodenbearbeitungstätigkeit, einer bestimmten Bodenbearbeitungsintensität und gegebenenfalls weiteren Parametern entsprechen. Anhand der Umgebungskarte und der dazu gespeicherten charakteristischen Energiemengen pro Flächeneinheit kann somit direkt erkannt werden, welche Umgebungsteilbereiche relativ energieintensiv sind, und welche Umgebungsteilbereiche demgegenüber zur Bodenbearbeitung eine geringere Energiemenge pro Flächeneinheit benötigen.

Das Bodenbearbeitungsgerät weist eine Steuer- und Auswerteeinrichtung auf, welche eingerichtet ist, auf die Umgebungskarte zuzugreifen, die gespeicherten Energiemengen miteinander zu vergleichen und in Abhängigkeit von den gespeicherten Energiemengen eine Reihenfolge festzulegen, mit welcher die Umgebungsteilbereiche zeitlich aufeinanderfolgend bearbeitet werden. Die Steuer- und Auswerteeinrichtung legt somit eine Bearbeitungsreihenfolge für mehrere Umgebungsteilbereiche fest. Die Bearbeitungsreihenfolge beinhaltet eine Mehrzahl von Bodenbearbeitungstätigkeiten, die in mehreren Umgebungsteilbereichen der Umgebung ausgeführt werden sollen. Dabei wird die zeitliche Aufeinanderfolge der Bodenbearbeitungstätigkeiten nach vordefinierten Regeln festgelegt, welche abhängig sind von den in der Umgebungskarte gespeicherten Energiemengen, die zur Bearbeitung der jeweiligen Umgebungsteilbereiche erforderlich sind. Die Regel zur Festlegung der Reihenfolge berücksichtigt die Energiemengen bezüglich ihres Betrages, so dass energieintensive Umgebungsteilbereiche zu einem anderen Zeitpunkt innerhalb der Bearbeitungsreihenfolge bearbeitet werden als energiegeringe Umgebungsteilbereiche.

In diesem Zusammenhang wird insbesondere vorgeschlagen, dass die Steuer- und Auswerteeinrichtung eingerichtet ist, die Reihenfolge so festzulegen, dass ein erster Umgebungsteilbereich, dessen Bodenbearbeitung eine größere erste Energiemenge benötigt, vor einem zweiten Umgebungsteilbereich bearbeitet wird, dessen Bodenbearbeitung eine gegenüber der ersten Energiemenge geringere zweite Energiemenge benötigt. Durch diese Planungsregel für die Reihenfolge der Bodenbearbeitungen in mehreren Umgebungsteilbereichen wird berücksichtigt, dass der Energiespeicher des Bodenbearbeitungsgerätes zu Beginn einer Reihenfolge von Bodenbearbeitungstätigkeiten möglichst hoch belastet werden sollte, um den Energiespeicher dadurch möglichst schnell zu erhitzen und auf Betriebstemperatur zu bringen. Durch die anfängliche Leistungsspitze der Energieentnahme wird der Innenwiderstand des Energiespeichers reduziert, was zu einer Schonung des Energiespeichers und Erhöhung seiner Lebensdauer führt. Die Umgebungsteilbereiche mit relativ geringer benötigter Energiemenge werden innerhalb der definierten Reihenfolge möglichst zuletzt bearbeitet, während die Umgebungsteilbereiche, zu deren Bodenbearbeitung eine relativ große Energiemenge erforderlich ist, zuerst bearbeitet werden. Die Umgebungsteilbereiche werden somit in bezogen auf ihre benötigte Energiemenge absteigender Reihenfolge bearbeitet. Nach der ersten oder den ersten Bodenbearbeitungstätigkeiten ist der Energiespeicher dann bereits vorgewärmt und die weiteren Umgebungsteilbereiche können bei Abarbeitung der festgelegten Bodenbearbeitungsreihenfolge effizient gereinigt werden. Die Bodenbearbeitung der energiegeringen Umgebungsteilbereiche am Ende der festgelegten Reihenfolge bewirkt zudem, dass der Energiespeicher dann bereits wieder - bezogen auf das Energiemaximum der definierten Reihenfolge - etwas abgekühlt wird und die Abkühlphase des Energiespeichers vor beispielsweise dem nächsten Wiederaufladen des Energiespeichers frühzeitig beginnt. Dies schont den Energiespeicher zusätzlich. Des Weiteren steht der Energiespeicher durch diese Maßnahme schnell wieder für einen nächsten Arbeitseinsatz zur Verfügung.

Vorteilhaft wird vorgeschlagen, dass die Steuer- und Auswerteeinrichtung eingerichtet ist, eine in dem Energiespeicher gespeicherte Gesamtenergiemenge auf mehrere Umgebungsteilbereiche aufzuteilen, so dass energieintensive Umgebungsteilbereiche zuerst bearbeitet werden und demgegenüber weniger energieintensive Umgebungsteilbereiche anschließend in bezogen auf die benötigte Energiemenge absteigender Reihenfolge bearbeitet werden bis die gespeicherte Gesamtenergiemenge vollständig aufgeteilt ist. Bei der Festlegung der Reihenfolge kann die Steuer- und Auswerteeinrichtung bereits die zur Verfügung stehende Gesamtenergiemenge berücksichtigen, so dass gegebenenfalls Bodenbearbeitungsparameter und/oder Geräteparameter des Bodenbearbeitungsgerätes für einige oder mehrere Umgebungsteilbereiche angepasst werden können und die Gesamtenergiemenge vorzugsweise ausreicht, um alle Umgebungsteilbereiche in einer geplanten Reihenfolge vollständig bearbeiten zu können. Diese Variante empfiehlt sich insbesondere dort, wo für einen Umgebungsteilbereich mehrere alternative Energiemengen definiert sind, die sich auf unterschiedliche (alternative) Bodenbearbeitungsparameter beziehen. Die Steuer- und Auswerteeinrichtung könnte aus dieser Auswahl von Bodenbearbeitungsparametern diejenigen auswählen, welche geeignet sind, die vollständige Abarbeitung der Reihenfolge von Bodenbearbeitungstätigkeiten zu ermöglichen, und die mit der in dem Energiespeicher gespeicherten Gesamtenergiemenge auskommen.

Des Weiteren kann vorgesehen sein, dass das Bodenbearbeitungsgerät einen Hindernissensor zur Detektion von Umgebungsmerkmalen und/oder eine Kartenerstellungseinrichtung zur Erstellung der Umgebungskarte anhand von Umgebungsmerkmalen und/oder einen Bodenartsensor aufweist, welcher eingerichtet ist, eine in einem Umgebungsteilbereich vorhandene Bodenart zu bestimmen. Das Bodenbearbeitungsgerät weist in diesem Fall eine oder mehrere eigene Detektionseinrichtungen auf, die Parameter detektieren, welche zur Erstellung der Umgebungskarte sowie Speicherung von Zusatzinformationen in der Umgebungskarte bzw. Verlinkung von Zusatzinformationen mit der Umgebungskarte geeignet sind. Beispielsweise kann das Bodenbearbeitungsgerät einen Hindernissensor aufweisen, welcher zum einen die Existenz von Hindernissen in der Umgebung erkennt, und zum anderen vorzugweise auch deren absolute Position in der Umgebung oder deren relative Position zu dem Ort des Bodenbearbeitungsgerätes erkennt. Auf dieser Basis kann dann eine Kartenerstellungseinrichtung des Bodenbearbeitungsgerätes selbst eine Umgebungskarte der Umgebung erstellen. Es ist nicht mehr erforderlich, externe Hindernissensoren in der Umgebung zu betreiben oder die Umgebungskarte durch eine externe Einrichtung erstellen zu lassen. Bei dem Hindernissensor kann es sich beispielsweise um eine Abstandsmesseinrichtung des Bodenbearbeitungsgerätes handeln, welche Abstände zu den in der Umgebung vorhandenen Hindernissen misst. Eine solche Abstandsmesseinrichtung misst vorzugsweise auf der Basis optischer Messmethoden. Insbesondere kann eine Lasermessung vorgenommen werden, die rund um das Bodenbearbeitungsgerät Abstände zu Hindernissen misst. Besonders bevorzugt eignet sich dafür eine Lasertriangulationsmesseinrichtung. Des Weiteren kann das Bodenbearbeitungsgerät wie vorgeschlagen auch einen Bodenartsensor aufweisen, welcher die Bodenart der Umgebungsteilbereiche der Umgebung detektiert und erkennt. Der Bodenartsensor kann beispielsweise erkennen, ob es sich bei einer Bodenart eines Umgebungsteilbereiches um einen Hartboden oder einen Teppichboden handelt. Besonders bevorzugt kann der Bodenartsensor die Bodenarten weiter nach Untergruppen von Hartböden und Teppichböden unterscheiden, beispielsweise niedrigflorigen oder hochflorigen Teppichboden, Fliesenboden, Holzboden und ähnlichen. Die Bodenart kann mit Hilfe von Bildverarbeitungstechniken ermittelt werden, wobei der Bodenartsensor beispielsweise eine Kamera ist, die Bilder der zu bearbeitenden Bodenfläche der Umgebung aufnimmt. Die Kamerabilder können dann mit in einem Speicher hinterlegten Bodenartreferenzen verglichen werden, wobei die Bodenart eines Umgebungsteilbereiches bei Übereinstimmung eines aktuellen Bodens mit einer Referenz erkannt ist. Zudem kann eine Bodenart auch durch Reflexionsmessungen ermittelt werden, wobei berücksichtigt wird, dass Teppiche und Teppichböden einen geringeren Reflexionsgrad aufweisen als Hartböden. Zudem kann eine Bodenart auch taktil detektiert werden, beispielsweise indem eine Einsinkeigenschaft eines Sensors in das Material des Bodens ermittelt wird.

Neben dem zuvor beschriebenen Bodenbearbeitungsgerät wird mit der Erfindung des Weiteren ein Verfahren zum Betrieb eines solchen Bodenbearbeitungsgerätes vorgeschlagen, wobei zu mindestens zwei Umgebungsteilbereichen der Umgebungskarte eine Angabe gespeichert wird, die angibt, welche Energiemenge das Bodenbearbeitungsgerät zur Bodenbearbeitung des jeweiligen Umgebungsteilbereiches benötigen wird. Die zuvor in Bezug auf das Bodenbearbeitungsgerät beschriebenen Merkmale und Vorteile ergeben sich entsprechend auch für das erfindungsgemäße Verfahren. Zur Vermeidung von Wiederholungen wird in Bezug auf das Verfahren ebenfalls auf die vorgenannten Ausführungen verwiesen.

Insbesondere kann für die Verfahrensführung vorgesehen sein, dass eine Steuer- und Auswerteeinrichtung des Bodenbearbeitungsgerätes auf die Umgebungskarte zugreift, die gespeicherten Energiemengen miteinander vergleicht und in Abhängigkeit von den gespeicherten Energiemengen eine Reihenfolge festlegt, mit welcher die Umgebungsteilbereiche zeitlich aufeinanderfolgend bearbeitet werden. Insbesondere kann die Reihenfolge so festgelegt werden, dass ein erster Umgebungsteilbereich, dessen Bodenbearbeitung eine größere erste Energiemenge benötigt, vor einem zweiten Umgebungsteilbereich bearbeitet wird, dessen Bodenbearbeitung eine gegenüber der ersten Energiemenge geringere zweite Energiemenge benötigt. Insgesamt werden somit vorzugsweise energieintensive Umgebungsteilbereiche innerhalb der festgelegten Reihenfolge zuerst bearbeitet, um den Energiespeicher, vorzugsweise einen Akkumulator, zu Beginn der Reihenfolge von Bodenbearbeitungstätigkeiten möglichst intensiv zu belasten, um den Energiespeicher vorzuwärmen und somit auf Betriebstemperatur zu bringen. Dies verlängert insbesondere die Lebensdauer des Energiespeichers und sorgt für eine effiziente Energiebereitstellung für die Verbraucher des Bodenbearbeitungsgerätes. Im Gegensatz zu im Stand der Technik bekannten Strategien zur Abarbeitung einer Mehrzahl von Bodenbearbeitungstätigkeiten fährt das Bodenbearbeitungsgerät nicht zunächst den bezogen auf seine eigene Position nächstliegenden Umgebungsteilbereich der Umgebung an und führt dort eine Bodenbearbeitungstätigkeit aus, sondern fährt innerhalb der Umgebung zu einem solchen Umgebungsteilbereich, welcher eine relativ hohe oder höchste Energiemenge zur Bodenbearbeitung benötigt. Ein solcher Umgebungsteilbereich kann ein von dem aktuellen Standort des Bodenbearbeitungsgerätes entfernter und nicht benachbarter Umgebungsteilbereich sein, so dass das Bodenbearbeitungsgerät andere, momentan nicht zu bearbeitende Umgebungsteilbereiche durchfahren muss, um zu dem zuerst zu bearbeitenden Umgebungsteilbereich zu gelangen.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät,
- Fig. 2: eine Umgebungskarte einer Umgebung mit mehreren Umgebungsteilbereichen,
- Fig. 3: eine Tabelle mit Parametern der Umgebungsteilbereiche sowie einer Reihenfolge der Umgebungsteilbereiche entlang einer Fortbewegungsroute,
- Fig. 4: die Umgebungskarte mit einer Fortbewegungsroute für das Bodenbearbeitungsgerät.

### Beschreibung der Ausführungsformen

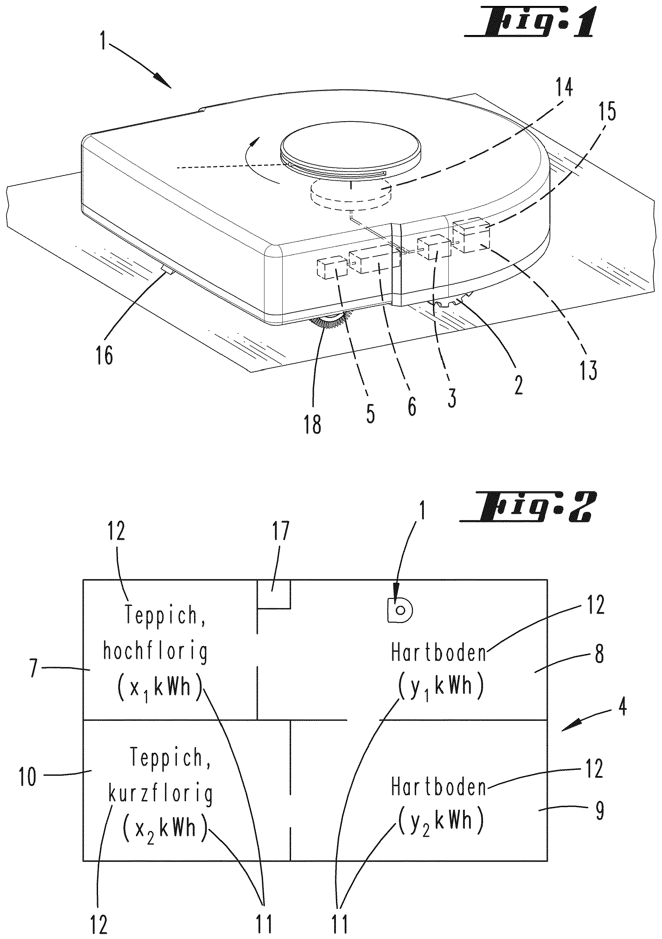

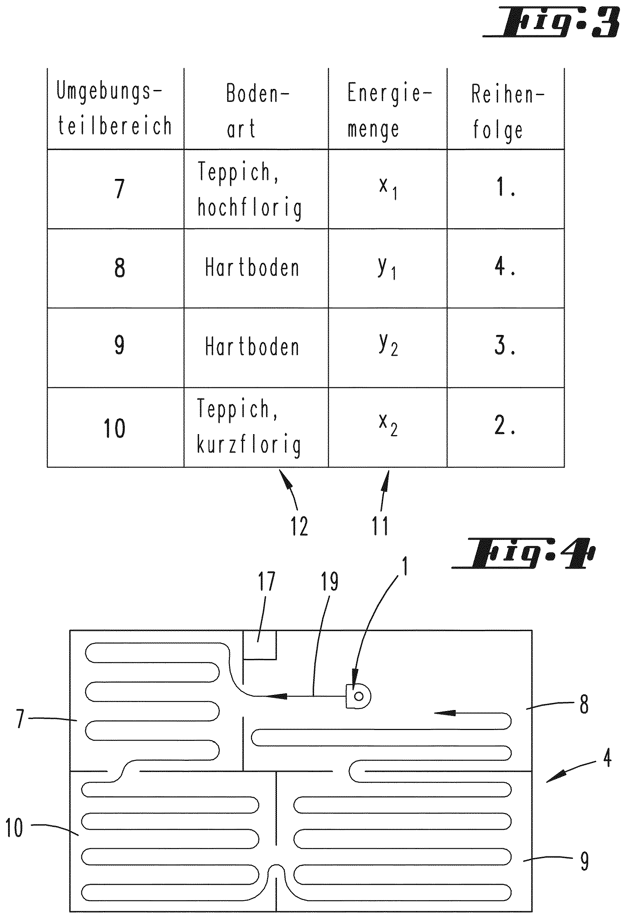

Figur 1 zeigt zunächst ein beispielhaftes sich selbsttätig fortbewegendes Bodenbearbeitungsgerät 1, welches beispielsweise als Reinigungsroboter ausgebildet sein kann. Das Bodenbearbeitungsgerät 1 verfügt über eine Antriebseinrichtung 2 in Form von mittels eines Elektromotors (nicht dargestellt) angetriebenen Rädern. Der Elektromotor sowie weitere elektrische Verbraucher des Bodenbearbeitungsgerätes 1 werden durch einen Energiespeicher 3 mit Energie versorgt. Bei dem Energiespeicher 3 handelt es sich hier vorzugsweise um einen wiederaufladbaren Akkumulator. Das Bodenbearbeitungsgerät 1 weist des Weiteren einen Hindernissensor 14 auf, welcher eingerichtet ist, Abstände zu in der Umgebung des Bodenbearbeitungsgerätes 1 vorhandenen Objekten zu messen. Hier ist der Hindernissensor 14 beispielsweise eine optische Abstandsmesseinrichtung in der Form einer Lasertriangulationsmesseinrichtung. Der Hindernissensor 14 emittiert einen rotierenden Laserstrahl, welcher auf Objekte trifft und daran reflektiert wird. Anhand der reflektierten Strahlung kann auf einen Abstand des Bodenbearbeitungsgerätes 1 zu den Objekten geschlossen werden. Die Detektionssignale des Hindernissensors 14 werden genutzt, um eine (beispielhaft in Figur 2 dargestellte) Umgebungskarte 4 zu erstellen, die neben einem Grundriss der Umgebung auch die Position von Objekten innerhalb mehrerer Umgebungsteilbereiche 7, 8, 9, 10 in der Umgebung beinhalten kann. Die Umgebungskarte 4 ist in einem Datenspeicher 5 des Bodenbearbeitungsgerätes 1 abgelegt und wird von einer Navigationseinrichtung 6 genutzt, um eine Fortbewegungsroute 19 des Bodenbearbeitungsgerätes 1 (siehe Figur 4) durch einen oder mehrere Umgebungsteilbereiche 7, 8, 9, 10 der Umgebung zu planen. Die Fortbewegungsroute 19 wird festgelegt, um innerhalb der Umgebung mehrere Bodenbearbeitungstätigkeiten durch das Bodenbearbeitungsgerät 1 ausführen zu können, insbesondere mit einer zeitlich und örtlich festgelegten Reihenfolge, die eine effiziente Bodenbearbeitung mehrerer Umgebungsteilbereiche 7, 8, 9, 10 der Umgebung erlaubt. Der Energiespeicher 3 des Bodenbearbeitungsgerätes 1 ist hier vorzugsweise ein wiederaufladbarer Akkumulator, der an einer Basisstation 17, welche eine Ladeeinrichtung bereitstellt, wiederaufgeladen werden kann. Vorzugsweise handelt es sich bei dem Energiespeicher 3 um einen Lithium-Ionen-Akkumulator.

Zur Durchführung einer oder mehrerer Bodenbearbeitungstätigkeiten weist das Bodenbearbeitungsgerät 1 ein oder mehrere Bodenbearbeitungselemente 18 auf. Hier verfügt das Bodenbearbeitungsgerät 1 beispielsweise um ein sich im Wesentlichen um eine horizontale Achse rotierende Reinigungswalze, die geeignet ist, Hartböden und Teppichböden zu bearbeiten. Die Bodenbearbeitungstätigkeiten sowie auch die Fortbewegung des Bodenbearbeitungsgerätes 1 werden durch eine Steuer- und Auswerteeinrichtung 13 des Bodenbearbeitungsgerätes 1 gesteuert. Des Weiteren verfügt das Bodenbearbeitungsgerät 1 über einen Bodenartsensor 16, welcher ausgebildet ist, in den Umgebungsteilbereichen 7, 8, 9, 10 vorhandene Bodenarten zu detektieren und zu erkennen. Hier handelt es sich bei dem Bodenartsensor 16 beispielsweise um einen optischen Sensor, welcher eingerichtet ist, Lichtsignale auszusenden und anhand der an den zu bearbeitenden Flächen reflektierten Lichtanteile zu erkennen, um welche Bodenart es sich in dem jeweiligen Teilbereich 7, 8, 9, 10 handelt. Alternativ zu einer Erkennung der Bodenart durch Auswertung des Reflexionsgrades kann ein alternativer Bodenartsensor 16 auf der Basis digitaler Bildverarbeitung funktionieren, wobei von dem Bodenartsensor 16 aufgenommene Bilder der Bodenfläche mit Referenzbildern bekannter Bodenarten verglichen werden, wobei eine Bodenart identifiziert ist, sobald ein aufgenommenes Bild mit einem Referenzbild übereinstimmt oder diesem zu einem bestimmten Grad ähnelt.

Figur 2 zeigt eine Umgebungskarte 4, welche mittels der Kartenerstellungseinrichtung 15 des Bodenbearbeitungsgerätes 1 erstellt wurde. Alternativ ist es jedoch auch möglich, dass eine externe Kartenerstellungseinrichtung 15, beispielsweise eine auf einem Server vorhandene Recheneinrichtung, die Erstellung der Umgebungskarte 4 übernimmt und diese dem Bodenbearbeitungsgerät 1 bzw. dessen Steuer- und Auswerteeinrichtung 13 sowie Navigationseinrichtung 6 zur Planung einer Fortbewegungsroute 19 zur Verfügung stellt. In der Umgebungskarte 4 sind die hier beispielsweise insgesamt vier Umgebungsteilbereiche 7, 8, 9, 10 der Umgebung vermerkt. In dem Umgebungsteilbereich 8 befinden sich das Bodenbearbeitungsgerät 1 sowie eine Basisstation 17, welches eingerichtet ist, Servicetätigkeiten an dem Bodenbearbeitungsgerät 1 auszuführen, unter anderem den Energiespeicher 3 des Bodenbearbeitungsgerätes 1 aufzuladen. In der Umgebungskarte 4 sind des Weiteren Bodenartangaben 12 zu den von dem Bodenartsensor 16 des Bodenbearbeitungsgerätes 1 erkannten Bodenarten gespeichert, wobei der Umgebungsteilbereich 7 einen hochflorigen Teppichboden aufweist, der Umgebungsteilbereich 8 einen Hartboden, der Umgebungsteilbereich 9 einen Hartboden und der Umgebungsteilbereich 10 einen kurzflorigen Teppichboden. In der Umgebungskarte 4 ist des Weiteren, jedem Umgebungsteilbereich 7, 8, 9, 10 zugeordnet, eine Energieangabe 11 gespeichert, die angibt, welche Energiemenge das Bodenbearbeitungsgerät 1 zur Bearbeitung der dortigen Bodenfläche benötigen wird. Die Energieangabe 11 bezieht sich dabei beispielsweise auf eine so definierte Standard-Bodenbearbeitungstätigkeit für die jeweilige Bodenart. Bezogen auf Hartböden sind beispielsweise eine bestimmte Saugleistungsstufe eines Gebläses und eine Drehzahl des Bodenbearbeitungselementes 18 definiert. Ebenso sind auch Standard- Bodenbearbeitungstätigkeiten für hochflorige und kurzflorige Teppiche bzw. Teppichböden definiert, die das Bodenbearbeitungsgerät 1 ohne anderslautende Vorgabe durch einen Nutzer des Bodenbearbeitungsgerätes 1 automatisch anwendet, d. h. ausführt. Die für Bodenbearbeitungstätigkeiten definierten Energieangaben 11 sind direkt in der Umgebungskarte 4, hier beispielsweise als x₁ kWh, x₂ kWh, y₁ kWh und y₂ kWh gespeichert. Die Energiemengen beziehen sich auf die gesamte Bodenbearbeitungstätigkeit in dem jeweiligen Umgebungsteilbereich 7, 8, 9, 10. Alternativ wäre es möglich, neben der Größe der Umgebungsteilbereiche 7, 8, 9, 10 eine benötigte Energiemenge pro Flächeneinheit zu speichern, so dass die Steuer- und Auswerteeinrichtung 13 aus diesen Angaben die für den jeweiligen Umgebungsteilbereich 7, 8, 9, 10 benötigte Energiemenge berechnen kann. Gegebenenfalls kann ein Umgebungsteilbereich 7, 8, 9, 10 auch in Unterteilbereiche aufgeteilt werden, um eine Fortbewegungsroute 19 zur Bodenbearbeitung der Umgebungsteilbereiche 7, 8, 9, 10 vorteilhaft festlegen zu können. Die Energiemenge, die zur Bearbeitung des Umgebungsteilbereiches 7, 8, 9, 10 erforderlich ist, kann empirisch anhand einer Vielzahl von in der Vergangenheit durch das Bodenbearbeitungsgerät 1 durchgeführten Bodenbearbeitungstätigkeiten ermittelt sein. Des Weiteren kann die Energiemenge jedoch auch theoretisch errechnet sein aus der in dem Umgebungsteilbereich 7, 8, 9, 10 vorhandenen Bodenart, der Kenntnis über den Energiebedarf elektrischer Verbraucher des Bodenbearbeitungsgerätes 1, eine Zeitspanne, die für die Bodenbearbeitungstätigkeit üblicherweise erforderlich ist und andere.

Figur 3 zeigt eine Tabelle, welche Parameter der Umgebungsteilbereiche 7, 8, 9, 10 enthält. In der ersten Spalte befinden sich die Umgebungsteilbereiche 7, 8, 9, 10. Die rechts danebenliegende Spalte zeigt die in dem jeweiligen Umgebungsteilbereich 7, 8, 9, 10 vertretene Bodenart, unterschieden in Teppich hochflorig, Hartboden, Teppich kurzflorig. Die Bodenart kann grundsätzlich noch weiter unterteilt sein in verschiedene Hartböden und dergleichen. Des Weiteren gibt die weiter rechts danebenliegende nächste Spalte die Energieangabe 11 an, welche eine zur Bodenbearbeitung des jeweiligen Umgebungsteilbereiches 7, 8, 9, 10 benötigte Energiemenge beinhaltet, hier angegeben als x₁, x₂, y₁, y₂. Anhand der in der Spalte "Energiemenge" eingetragenen Daten ermittelt die Steuer- und Auswerteeinrichtung 13 des Bodenbearbeitungsgerätes 1 einen Umgebungsteilbereich 7, 8, 9, 10 mit einem größten Energiebedarf zur Bodenbearbeitung des jeweiligen Umgebungsteilbereiches 7, 8, 9, 10. Dies ist hier beispielhaft der Umgebungsteilbereich 7 mit der Energiemenge "x₁", die zur Bodenbearbeitung des Umgebungsteilbereiches 7 mit hochflorigem Teppich erforderlich ist. Die Steuer- und Auswerteeinrichtung 13 des Bodenbearbeitungsgerätes 1 legt dann eine Reihenfolge der Umgebungsteilbereiche 7, 8, 9, 10 für eine Fortbewegungsroute 19 fest, innerhalb welcher sich das Bodenbearbeitungsgerät 1 durch die Umgebungsteilbereiche 7, 8, 9, 10 bewegt, um dort zeitlich aufeinanderfolgend Bodenbearbeitungstätigkeiten auszuführen. Dabei wählt die Steuer- und Auswerteeinrichtung 13 die Reihenfolge der Umgebungsteilbereiche 7, 8, 9, 10 so aus, dass besonders energieintensive Umgebungsteilbereiche 7, 8, 9, 10 zuerst gereinigt werden und demgegenüber energiegeringere Umgebungsteilbereiche 7, 8, 9, 10 erst anschließend. Hier wird gemäß der in der ganz rechts dargestellten Spalte der Tabelle eine Reihenfolge festgelegt, die zunächst eine Bodenbearbeitung des Umgebungsteilbereiches 7 vorsieht, dann eine Bodenbearbeitung des Umgebungsteilbereiches 10, dann eine Bodenbearbeitungstätigkeit in dem Umgebungsteilbereich 9 und schließlich eine Bodenbearbeitung des Umgebungsteilbereiches 8. Dabei benötigt der Umgebungsteilbereich 8, welcher einen Hartboden aufweist, die geringste Energiemenge "y₁", welche geringer ist als die zur Bearbeitung der übrigen Umgebungsteilbereiche 7, 9, 10 benötigten Energiemengen "x₁"*,* "y₂" und x₂". Die vorrangige Bearbeitung energieintensiver Umgebungsteilbereiche 7, 8, 9, 10 sorgt dafür, dass der Energiespeicher 3 des Bodenbearbeitungsgerätes 1 zu Beginn der Fortbewegungsroute 19 schnell auf Betriebstemperatur erhitzt wird und der Innenwiderstand des Energiespeichers verringert wird, was zu einem optimalen Betrieb sowie Lebensdauerverlängerung des Energiespeichers 3 beiträgt. Dadurch, dass hier beispielsweise der Umgebungsteilbereich 8, welcher die geringste Energiemenge zur Bodenbearbeitung erfordert, zuletzt gereinigt wird, kann der Energiespeicher 3 zum Ende der Fortbewegungsroute 19 zudem langsam wieder abkühlen, bevor ein Wiederaufladen des Energiespeichers 3 an der Basisstation 17 erfolgt. Dies spart Zeit für den gesamten Bodenbearbeitungs- und Wiederaufladungsprozess, da der Energiespeicher 3 nicht erst separat abgekühlt werden muss, bevor die eigentliche Ladetätigkeit erfolgen kann.

Figur 4 zeigt schließlich die Fortbewegungsroute 19, welche die Steuer-und Auswerteeinrichtung 13 des Bodenbearbeitungsgerätes 1 zur Bearbeitung der Umgebungsteilbereiche 7, 8, 9, 10 festgelegt hat. Erkennbar ist, dass ausgehend von einem aktuellen Standort des Bodenbearbeitungsgerätes 1 zunächst der Umgebungsteilbereich 7 gereinigt wird, welcher nicht demjenigen Umgebungsteilbereich 8 entspricht, in welchem sich das Bodenbearbeitungsgerät 1 bei Start der Fortbewegungsroute 19 befindet. Vielmehr fährt das Bodenbearbeitungsgerät 1 zunächst in den benachbarten Umgebungsteilbereich 7, von dort aus in den ebenfalls einen Teppichboden aufweisenden Umgebungsteilbereich 10 und dann erst in die Umgebungsteilbereiche 9 und 8, welche einen zu bearbeitenden Hartboden aufweisen.

### Liste der Bezugszeichen

- 1: Bodenbearbeitungsgerät
- 2: Antriebseinrichtung
- 3: Energiespeicher
- 4: Umgebungskarte
- 5: Datenspeicher
- 6: Navigationseinrichtung
- 7: Umgebungsteilbereich
- 8: Umgebungsteilbereich
- 9: Umgebungsteilbereich
- 10: Umgebungsteilbereich
- 11: Energieangabe
- 12: Bodenartangabe
- 13: Steuer- und Auswerteeinrichtung
- 14: Hindernissensor
- 15: Kartenerstellungseinrichtung
- 16: Bodenartsensor
- 17: Basisstation
- 18: Bodenbearbeitungselement
- 19: Fortbewegungsroute

## Patentansprüche

1. Sich selbsttätig fortbewegendes Bodenbearbeitungsgerät (1) mit einer Antriebseinrichtung (2) zum selbsttätigen Fortbewegen des Bodenbearbeitungsgerätes (1) innerhalb einer Umgebung, einem Energiespeicher (3), einem eine Umgebungskarte (4) der Umgebung aufweisenden Datenspeicher (5) und einer Navigationseinrichtung (6) zum Navigieren und Selbstlokalisieren des Bodenbearbeitungsgerätes (1) innerhalb der Umgebung anhand der Umgebungskarte (4), wobei die Umgebungskarte (4) Umgebungsteilbereiche (7, 8, 9, 10) aufweist, wobei die Umgebungskarte (4) zu mindestens zwei Umgebungsteilbereichen (7, 8, 9, 10) eine Energieangabe (11) aufweist, die angibt, welche Energiemenge das Bodenbearbeitungsgerät (1) zur Bodenbearbeitung des jeweiligen Umgebungsteilbereiches (7, 8, 9, 10) benötigen wird und
**dadurch gekennzeichnet,**
**dass** eine Steuer-und Auswerteeinrichtung (13) vorgesehen ist, welche eingerichtet ist, auf die Umgebungskarte (4) zuzugreifen, die gespeicherten Energiemengen miteinander zu vergleichen und in Abhängigkeit von den gespeicherten Energiemengen eine Reihenfolge festzulegen, mit welcher die Umgebungsteilbereiche (7, 8, 9, 10) zeitlich aufeinanderfolgend bearbeitet werden.

2. Bodenbearbeitungsgerät (1) nach Anspruch 1, **dadurch gekennzeichnet,**
**dass** die Energiemenge in Abhängigkeit von einer in dem Umgebungsteilbereich (7, 8, 9, 10) vorhandenen Bodenart ermittelt ist, und/oder dass die Energiemenge in Abhängigkeit von einer empirisch ermittelten Energiemenge zur Bearbeitung des Umgebungsteilbereiches (7, 8, 9, 10) ermittelt ist.

3. Bodenbearbeitungsgerät (1) nach Anspruch 1 oder 2, **dadurch gekennzeichnet, dass** die Umgebungskarte (4) eine Bodenartangabe (12) zu einer in dem Umgebungsteilbereich (7, 8, 9, 10) vertretenen Bodenart aufweist, wobei die Bodenart insbesondere ausgewählt ist aus Hartboden, kurzfloriger Teppichboden, hochfloriger Teppichboden.

4. Bodenbearbeitungsgerät (1) nach einem der vorhergehenden Ansprüche, **dadurch gekennzeichnet**, die Umgebungskarte (4) für den jeweiligen Umgebungsteilbereich (7, 8, 9, 10) eine zur Bodenbearbeitung benötigte charakteristische Energiemenge pro Flächeneinheit angibt.

5. Bodenbearbeitungsgerät (1) nach einem der vorhergehenden Ansprüche, **dadurch gekennzeichnet, dass** die Steuer- und Auswerteeinrichtung (13) eingerichtet ist, die Reihenfolge so festzulegen, dass ein erster Umgebungsteilbereich (7, 8, 9, 10), dessen Bodenbearbeitung eine größere erste Energiemenge benötigt, vor einem zweiten Umgebungsteilbereich (7, 8, 9, 10) bearbeitet wird, dessen Bodenbearbeitung eine gegenüber der ersten Energiemenge geringere zweite Energiemenge benötigt.

6. Bodenbearbeitungsgerät (1) nach einem der vorhergehenden Ansprüche, **dadurch gekennzeichnet, dass** die Steuer- und Auswerteeinrichtung (13) eingerichtet ist, eine in dem Energiespeicher (3) gespeicherte Gesamtenergiemenge auf mehrere Umgebungsteilbereiche (7, 8, 9, 10) aufzuteilen, so dass energieintensive Umgebungsteilbereiche (7, 8, 9, 10) zuerst bearbeitet werden und demgegenüber weniger energieintensive Umgebungsteilbereiche (7, 8, 9, 10) anschließend in bezogen auf die benötigte Energiemenge absteigender Reihenfolge bearbeitet werden bis die gespeicherte Gesamtenergiemenge vollständig aufgeteilt ist.

7. Bodenbearbeitungsgerät (1) nach einem der vorhergehenden Ansprüche, **dadurch gekennzeichnet, dass** das Bodenbearbeitungsgerät (1) einen Hindernissensor (14) zur Detektion von Umgebungsmerkmalen und/oder eine Kartenerstellungseinrichtung (15) zur Erstellung der Umgebungskarte (4) anhand von Umgebungsmerkmalen und/oder einen Bodenartsensor (16) aufweist, welcher eingerichtet ist, eine in einem Umgebungsteilbereich (7, 8, 9, 10) vorhandene Bodenart zu bestimmen.

8. Verfahren zum Betrieb eines nach einem der vorhergehenden Ansprüche ausgebildeten Bodenbearbeitungsgerätes (1), **dadurch gekennzeichnet, dass** zu mindestens zwei Umgebungsteilbereichen (7, 8, 9, 10) der Umgebungskarte (4) eine Angabe gespeichert wird, die angibt, welche Energiemenge das Bodenbearbeitungsgerät (1) zur Bodenbearbeitung des jeweiligen Umgebungsteilbereiches (7, 8, 9, 10) benötigen wird.

9. Verfahren nach Anspruch 8, **dadurch gekennzeichnet, dass** eine Steuer-und Auswerteeinrichtung (13) des Bodenbearbeitungsgerätes (1) auf die Umgebungskarte (4) zugreift, die gespeicherten Energiemengen miteinander vergleicht und in Abhängigkeit von den gespeicherten Energiemengen eine Reihenfolge festlegt, mit welcher die Umgebungsteilbereiche (7, 8, 9, 10) zeitlich aufeinanderfolgend bearbeitet werden, wobei die Reihenfolge insbesondere so festgelegt wird, dass ein erster Umgebungsteilbereich (7, 8, 9, 10), dessen Bodenbearbeitung eine größere erste Energiemenge benötigt, vor einem zweiten Umgebungsteilbereich (7, 8, 9, 10) bearbeitet wird, dessen Bodenbearbeitung eine gegenüber der ersten Energiemenge geringere zweite Energiemenge benötigt.

## Claims

1. Self-propelled surface treatment unit (1) with a drive device (2) for the autonomous travel of the surface treatment unit (1) within an environment, an energy storage device (3), a data storage device (5) having an environmental map (4) of the environment, and a navigation device (6) for the navigation and self-location of the surface treatment unit (1) within the environment, on the basis of the environmental map (4), wherein the environmental map (4) has environmental zones (7, 8, 9, 10), wherein the environmental map (4) has energy data (11) for at least two environmental zones (7, 8, 9, 10), which indicates the amount of energy that the surface treatment unit (1) will require for the surface treatment of the respective environmental zone (7, 8, 9, 10) and **characterized in that** a control and evaluation device (13) is provided, which is equipped to access the environmental map (4), to compare the stored amounts of energy with one another, and, as a function of the stored amounts of energy, to determine a sequence in which the environmental zones (7, 8, 9, 10) are treated in succession.

2. Surface treatment unit (1) according to Claim 1, **characterised in that**, the amount of energy is determined as a function of a surface type present in the environmental zone (7, 8, 9, 10), and/or **in that** the amount of energy is determined as a function of an empirically determined amount of energy for the treatment of the environmental zone (7, 8, 9, 10).

3. Surface treatment unit (1) according to Claim 1 or 2, **characterised in that**, the environmental map (4) has surface type data (12) for a surface type represented in the environmental zone (7, 8, 9, 10), wherein the surface type is, in particular, selected from a hard surface, a short-pile carpeted surface, or a long-pile carpeted surface.

4. Surface treatment unit (1) according to one of the preceding claims, **characterised in that**, for the environmental zone (7, 8, 9, 10) in question, the environmental map (4) indicates a characteristic amount of energy per unit surface area required for the surface treatment.

5. Surface treatment unit (1) according to one of the preceding claims, **characterised in that**, the control and evaluation device (13) is equipped to determine the sequence, such that a first environmental zone (7, 8, 9, 10), the surface treatment of which requires a larger first amount of energy, is treated before a second environmental zone (7, 8, 9, 10), the surface treatment of which requires a smaller second amount of energy, compared to the first amount of energy.

6. Surface treatment unit (1) according to one of the preceding claims, **characterised in that**, the control and evaluation device (13) is equipped to apportion a total amount of energy stored in the energy storage device (3) amongst a plurality of environmental zones (7, 8, 9, 10), so that energy-intensive environmental zones (7, 8, 9, 10) are treated first and, in contrast, less energy-intensive environmental zones (7, 8, 9, 10) are subsequently treated with respect to the required amount of energy in descending order, until the total amount of energy stored is fully apportioned.

7. Surface treatment unit (1) according to one of the preceding claims, **characterised in that**, the surface treatment unit (1) has an obstacle sensor (14) for the detection of environmental features, and/or a map generation device (15) for the creation of the environmental map (4) on the basis of environmental features, and/or a surface type sensor (16), which is equipped to determine a surface type that is present in an environmental zone (7, 8, 9, 10).

8. Method for the operation of a surface treatment unit (1) designed according to one of the preceding claims, **characterised in that**, data is stored for at least two environmental zones (7, 8, 9, 10) of the environmental map (4), which data indicates the amount of energy that the surface treatment unit (1) will require for the surface treatment of the respective environmental zone (7, 8, 9, 10).

9. Method according to Claim 8, **characterised in that**, a control and evaluation device (13) of the surface treatment unit (1) accesses the environmental map (4), compares the stored amounts of energy with one another, and, as a function of the stored amounts of energy, determines a sequence with which the environmental zones (7, 8, 9, 10) are treated in succession, wherein in particular, the sequence is determined such that a first environmental zone (7, 8, 9, 10), the surface treatment of which requires a greater first amount of energy, is treated before a second environmental zone (7, 8, 9, 10), the surface treatment of which requires a smaller second amount of energy, compared to the first amount of energy.

## Revendications

1. Appareil de travail du sol (1) se déplaçant automatiquement avec un dispositif d'entraînement (2) pour le déplacement automatique de l'appareil de travail du sol (1) dans un environnement, un accumulateur d'énergie (3), une mémoire de données (5) présentant une carte d'environnement (4) de l'environnement et un dispositif de navigation (6) pour naviguer et localiser automatiquement l'appareil de travail du sol (1) à l'intérieur de l'environnement à l'aide de la carte d'environnement (4), la carte d'environnement (4) présentant des zones partielles d'environnement (7, 8, 9, 10), la carte d'environnement (4) étant associée à au moins deux zones partielles d'environnement (7, 8, 9, 10), une indication d'énergie (11) qui indique la quantité d'énergie dont l'appareil de travail du sol (1) aura besoin pour le travail du sol de la zone partielle environnante respective (7, 8, 9, 10) et **caractérisé en ce qu'**il est prévu un dispositif de commande et d'évaluation (13) qui est conçu pour accéder à la carte environnement (4), comparer entre elles les quantités d'énergie mémorisées et déterminer, en fonction des quantités d'énergie mémorisées, un ordre dans lequel les zones partielles environnantes (7, 8, 9, 10) sont traitées successivement dans le temps.

2. Appareil de travail du sol (1) selon la revendication 1, **caractérisé en ce que** la quantité d'énergie est déterminée en fonction d'un type de sol présent dans la zone partielle environnante (7, 8, 9, 10), et/ou **en ce que** la quantité d'énergie est déterminée en fonction d'une quantité d'énergie déterminée empiriquement pour le travail de la zone partielle environnante (7, 8, 9, 10).

3. Appareil de traitement du sol (1) selon la revendication 1 ou 2, **caractérisé en ce que** la carte d'environnement (4) présente une indication de type de sol (12) vers d'un type de sol représenté dans la zone partielle d'environnement (7, 8, 9, 10), le type de sol étant notamment choisi parmi un sol dur, une moquette à poils courts, une moquette à poils longs.

4. Appareil de travail du sol (1) selon l'une des revendications précédentes, **caractérisé en ce que** la carte d'environnement (4) indique, pour la zone partielle d'environnement respective (7, 8, 9, 10), une quantité d'énergie caractéristique par unité de surface nécessaire au travail du sol.

5. Appareil de travail du sol (1) selon l'une des revendications précédentes, **caractérisé en ce que** le dispositif de commande et d'évaluation (13) est agencé pour déterminer la séquence de telle sorte qu'une première zone partielle d'environnement (7, 8, 9, 10), dont le travail du sol nécessite une première quantité d'énergie plus importante, est travaillée avant une deuxième zone partielle d'environnement (7, 8, 9, 10), dont le travail du sol nécessite une deuxième quantité d'énergie plus faible par rapport à la première quantité d'énergie.

6. Appareil de travail du sol (1) selon l'une des revendications précédentes, **caractérisé en ce que** le dispositif de commande et d'évaluation (13) est conçu pour répartir une quantité d'énergie totale stockée dans l'accumulateur d'énergie (3) entre plusieurs zones partielles d'environnement (7, 8, 9, 10), de sorte que les zones partielles d'environnement (7, 8, 9, 10) sont traitées en premier et que, par contre, les zones partielles d'environnement (7, 8, 9, 10) moins gourmandes en énergie sont ensuite traitées dans un ordre décroissant par rapport à la quantité d'énergie nécessaire, jusqu'à ce que la quantité d'énergie totale stockée soit entièrement répartie.

7. Appareil de travail du sol (1) selon l'une des revendications précédentes, **caractérisé en ce que** l'appareil de travail du sol (1) présente un capteur d'obstacles (14) pour la détection de caractéristiques d'environnement et/ou un dispositif d'établissement de carte (15) pour l'établissement de la carte d'environnement (4) à l'aide de caractéristiques d'environnement et/ou un capteur de type de sol (16), qui est conçu pour déterminer un type de sol présent dans une zone partielle d'environnement (7, 8, 9, 10).

8. Procédé pour faire fonctionner un appareil de travail du sol (1) réalisé selon l'une des revendications précédentes, **caractérisé en ce que**, pour au moins deux zones partielles d'environnement (7, 8, 9, 10) de la carte d'environnement (4), une indication est mémorisée, qui indique quelle quantité d'énergie l'appareil de travail du sol (1) aura besoin pour le travail du sol de la zone partielle d'environnement respective (7, 8, 9, 10).

9. Procédé selon la revendication 8, **caractérisé en ce qu'**un dispositif de commande et d'évaluation (13) de l'appareil de travail du sol (1) accède à la carte d'environnement (4), compare entre elles les quantités d'énergie mémorisées et détermine, en fonction des quantités d'énergie mémorisées, un ordre dans lequel les zones partielles d'environnement (7, 8, 9, 10), l'ordre étant notamment déterminé de telle sorte qu'une première zone partielle d'environnement (7, 8, 9, 10), dont le traitement du sol nécessite une première quantité d'énergie plus importante, est traitée avant une deuxième zone partielle d'environnement (7, 8, 9, 10), dont le traitement du sol nécessite une deuxième quantité d'énergie plus faible par rapport à la première quantité d'énergie.
